# EUROPÄISCHE PATENTSCHRIFT

(11) **EP 2 008 866 B1**
(45) Veröffentlichungstag und Bekanntmachung des Hinweises auf die Patenterteilung: **01.06.2011**
(21) Anmeldenummer: 08010556.2
(22) Anmeldetag: 11.06.2008
(51) Int. Cl.: B60N 2/60

(54) **Schutzbezug**
Protective cover
Housse de protection

(30) Priorität: 27.06.2007 DE 102007029692
(43) Veröffentlichungstag der Anmeldung: 31.12.2008
(73) Patentinhaber: Horn & Bauer GmbH & Co. KG, 34613 Schwalmstadt (DE)
(72) Erfinder: Mohr, Thomas, 35279 Neustadt-Momberg (DE)
(74) Vertreter: Rehberg Hüppe + Partner

(56) Entgegenhaltungen:
- DE-A1- 10 035 975
- DE-B1- 1 630 878
- DE-C1- 4 132 714
- DE-C1- 4 333 051
- DE-C1- 19 536 062
- DE-C1- 19 817 058
- DE-U1- 8 023 722

## Beschreibung

### TECHNISCHES GEBIET DER ERFINDUNG

Die Erfindung betrifft einen Schutzbezug für ein Kraftfahrzeug, der einen Sitzbereich aufweist, welcher zur zumindest teilweisen Abdeckung eines Kraftfahrzeugsitzes des Kraftfahrzeuges dient. Weiterhin betrifft die Erfindung eine Bahn mit derartigen Schutzbezügen.

### STAND DER TECHNIK

Schutzbezüge der hier vorliegenden Art dienen dem Schutz des Innenraumes eines Kraftfahrzeuges gegenüber Verschmutzungen. Beispielsweise findet ein derartiger Schutzbezug Einsatz zum Schutz eines Kraftfahrzeugsitzes vor einer Erstauslieferung eines Kraftfahrzeuges an einen Kunden. Ebenfalls möglich ist der Einsatz des Schutzbezuges, wenn sich das Kraftfahrzeug in einer Werkstatt befindet. In beiden Fällen besteht die Gefahr, dass sich ein Monteur mit verunreinigter Kleidung auf den Kraftfahrzeugsitz setzt. Ist in einem derartigen Fall zwischen Monteur und Kraftfahrzeugsitz ein Schutzbezug eingeordnet, wird der Kraftfahrzeugsitz geschützt und allenfalls der Schutzbezug verunreinigt, der anschließend entfernt werden kann. Bei dem gattungsgemäßen Schutzbezug kann es sich um einen Einmal-Schutzbezug oder einen Schutzbezug für einen mehrmaligen Einsatz handeln.

Weiterhin kann der Schutzbezug eingesetzt werden bei dem Hersteller des Kraftfahrzeugsitzes und bei der Zulieferung des Kraftfahrzeugsitzes zu einem Automobilwerk oder einer Werkstatt. Vorteilhaft kann auch der Einsatz des Schutzbezuges bei der Bestückung von Förderanlagen sein. Schließlich muss in dem Automobilwerk das fertig gestellte Kraftfahrzeug von einem Band gefahren werden, in eine Auslieferungshalle verbracht werden, auf einen Lastkraftwagen oder Eisenbahnwaggon oder ein Schiff geladen werden und letztendlich bei einem Kraftfahrzeughändler nochmals gehandhabt werden, bis das Kraftfahrzeug letztendlich in die Hand des Erwerbers ausgeliefert werden kann. Von der Herstellung des Sitzes beim Zulieferer bis zur Auslieferung des Kraftfahrzeuges an den Erwerber kommen die Kraftfahrzeug-Sitze etwas 30 bis 35 mal in Kontakt mit Monteuren und mit anderen Personen, so dass viele Möglichkeiten für eine Verschmutzung des Kraftfahrzeugsitzes bestehen, die mit gattungsgemäßen Schutzbezügen vermieden werden sollen.

Ein erster Schutzbezug ist aus DE-AS 16 30 878 bekannt. Bei der Herstellung des Schutzbezuges wird ein Schlauch aus Kunststofffolie durch einen Längsschnitt zu einem Halbschlauch aufgeschnitten. Die dabei entstehenden beiden Ränder werden voneinander entfernt und flach gefaltet auf das übrige Material des Halbschlauches gelegt, wobei eine flach liegende, im Wesentlichen doppellagige Bahn gebildet wird, bei der die Kunststofffolie im Bereich der beiden freien Ränder links und rechts umgeschlagen ist. Durch eine Querschweißung, quer zur Förderrichtung der Folienbahn, werden pro Schutzbezug die umgeschlagenen Bereiche, die insgesamt gleichsam eine Rückenlage bilden, mit der durchgehenden Vorderlage für jeden Schutzbezug miteinander verbunden. Dabei werden zwei Taschen gebildet, die in der Regel unterschiedlich tief bemessen sind, wobei die eine Tasche zur Aufnahme der Rückenlehne des Kraftfahrzeugsitzes und die andere Tasche zur Aufnahme bzw. zum Umschließen des Sitzpolsters des Kraftfahrzeugsitzes bestimmt sind. Die durchgehende Seite des Schlauchs bzw. Schutzbezugs ist als Vorderlage bezeichnet, weil sie in der über den Sitz gestülpten Stellung des Schutzbezugs vorne liegt und damit auf der Sitzfläche des Sitzpolsters und auf der Rückenlehnenfläche der Rückenlehne anliegt. Die andere Lage des Schutzbezugs ist als Rücklage bezeichnet, weil sie in montiertem Zustand des Schutzbezugs hinter der Rückenlehne bzw. unter dem Sitz zu liegen kommt und damit nach rückwärts ausgerichtet ist. Die in Verbindung mit der Vorderlage die Taschen bildenden Bereiche der Rücklage sind herstellungsbedingt voneinander getrennt und stehen nicht miteinander in Verbindung. Damit umschließt der Schutzbezug zwar im Bereich der beiden Taschen die Rückenlehne und den Schutzbezug so, dass die beabsichtigte Schutzwirkung gegen Verschmutzung erreicht wird. Gerade aber in dem Bereich der Vorderlage, der von den Taschen nicht abgedeckt wird, ergibt sich praktisch ein einlagiges Stück aus der Vorderlage, welches an beiden Seiten des Sitzes seitlich offen ist, so dass der Kraftfahrzeugsitz hier ungeschützt sein kann. Gerade dieser Bereich kann aber besonders gefährdet sein, da dieser Bereich in direkten Kontakt mit den Händen des Benutzers des Kraftfahrzeugsitzes, beispielsweise bei einer Sitzverstellung oder einer Betätigung des Gurtschlosses oder bei einem Abstützen beim Setzen oder Aufstehen, kommen kann. Auch besteht die Gefahr eines Verrutschens des Schutzbezuges. DE-AS 16 30 878 ist darüber hinaus der Einsatz eines Gummibandes zu entnehmen, welches nach dem "Aufstülpen" auf den Kraftfahrzeugsitz eine gewisse Straffungswirkung ausübt, so dass insbesondere die Vorderlage des Schutzbezuges näher an dem Sitzpolster und an der Rückenlehne gehalten ist.

Auch in DE 72 07 800 U1 ist ein Schutzbezug beschrieben, der sowohl ein horizontales Sitzpolster als auch eine aufrechte Rückenlehne auf der Vorderseite des Kraftfahrzeuges überdeckt. In beiden Endbereichen besitzt dieser Schutzbezug Taschen, in welche eine Vorderkante des Sitzpolsters sowie eine obere Kante der Rückenlehne eingeschoben werden können zwecks Verbindung des Schutzbezuges mit dem mit der Sitzfläche und der Rückenlehne gebildeten Fahrzeugsitz. Die der Rückenlehne zugeordnete Tasche besitzt eine Ausnehmung, durch welche eine Kopfstütze hindurch treten kann. Eine Fertigung der Ausnehmung erfolgt durch eine Wärmebehandlung, so dass durch Anschmelzen des Materiales ein wulstförmiger Rand gebildet ist, der eine zusätzliche Sicherung gegen ein Einreißen bieten soll. Eine Fertigung der Schonbezüge kann einzeln erfolgen unter Herstellung einer Trennschweißnaht oder zusammenhängend mit zwei Flachnähten und dazwischen liegender Abrissperforation in Form einer Bahn, die auf einer Rolle aufgewickelt ist. Zur Fertigung des Schutzbezuges findet ein Zuschnitt einer Kunststofffolie Einsatz, der im Wesentlichen rechteckförmig ist.

DE 41 32 714 C1 der Rechtsvorgängerin der Anmelderin offenbart einen Schutzbezug aus einer doppellagigen Kunststofffolie, die über eine obere Falte in eine Vorderlage und eine Rücklage aufgeteilt ist, wobei die unteren Kanten sowie die Seitenkanten der Vorderlage und Rücklage über Verschweißungen miteinander verbunden sind. In die Rücklage ist eine trapezförmige Ausnehmung eingebracht, so dass oberhalb und unterhalb der Ausnehmung jeweils eine Tasche gebildet ist, welche auf das Sitzpolster bzw. die Rückenlehne gestülpt werden kann. Seitlich der Ausnehmung verbleiben Verbindungsstreifen der Rücklage, welche auch abseits der Taschen ein Umschließen von Sitzpolster und Rückenlehne gewährleisten. Eine Fertigung des Schutzbezuges erfolgt vorzugsweise aus einem Halbschlauch einer Endlosbahn aus einer Kunststofffolie. Ergänzende Ausnehmungen können für die Montage einer Kopfstütze auf der Rückenlehne vorgesehen sein. Ebenfalls angesprochen ist in der Druckschrift eine alternative Herstellungsmöglichkeit des Schutzbezuges aus zwei getrennten Flachfolien, wobei eine Flachfolie die Rücklage und die andere Flachfolie die Vorderlage bildet.

Aus DE 43 33 051 C1 der Anmelderin ist ein Schon- oder Schutzbezug bekannt, bei welchem die Vorderlage im Übergangsbereich von dem das Sitzpolster abdeckenden Bereich zu dem die Rückenlehne abdeckenden Bereich eine Lasche aufweist. Die Lasche besitzt Perforationen, Anschnitte oder Trennschweißungen derart, dass aus der Lasche Fixierbänder herausgetrennt werden können. Die Lasche tritt grundsätzlich in den Spalt zwischen Sitzpolster und Rückenlehne ein, wobei die Fixierbänder hinter dem Fahrzeugsitz miteinander oder mit anderen Teilen des Schutzbezuges verbunden oder verknotet werden können, um zusätzlich zu den Taschen eine Fixierung des Schutzbezuges zu ermöglichen.

DE 195 36 062 C1 der Anmelderin offenbart eine Ausbildung des Schutzbezuges mit einer coextrudierten Kunststofffolie mit mehreren Schichten derart, dass diese auf ihren gegenüberliegenden Oberflächen unterschiedliche Reibungskoeffizienten aufweist. Durch geeignete Faltung einer derartigen Folie oder Schichtung einzelner Lagen unter Einsatz von Verschweißungen kann die Oberfläche mit der größeren Reibung dort eingesetzt werden, wo kleine Relativbewegungen des Schutzbezuges gewünscht sind, beispielsweise im Kontaktbereich des Schutzbezuges mit dem Sitzpolster und der Vorderseite der Rückenlehne, während in Bereichen größerer Relativbewegungen ein geringerer Reibungskoeffizient ausgenutzt werden kann, beispielsweise im Bereich der Taschen für die Oberfläche der Rücklage, die der Vorderlage zugekehrt ist, um das Überstülpen der Taschen zu vereinfachen. Weitere Vorteile kann die Beeinflussung der Reibverhältnisse über die Coextrusion haben im Zusammenhang mit dem Öffnen der Taschen, wobei durch die Wahl der Oberflächen und Reibungskoeffizienten vermieden werden soll, dass die einander zugekehrten Oberflächen von Vorderlage und Rücklage "aneinander ankleben", so dass diese von dem Benutzer nicht oder erschwert voneinander getrennt werden.

DE 196 45 999 C1 sind durch den Schutzbezug gebildete Schutzelemente zu entnehmen, mittels welchen Bereiche des Gelenkes, die zum Verschwenken der Rückenlehne gegenüber dem Sitzpolster dienen, abgedeckt werden können.

DE 198 17 058 C1 der Anmelderin schlägt vor, im Bereich des Spaltes zwischen Rückenlehne und Sitzpolster an der Vorderlage oder der Rücklage einen streifenförmigen Fortsatz vorzusehen, auf dem ein adhäsives Mittel vorgesehen ist, welches von einem abziehbaren Schutzstreifen abgedeckt ist. Der streifenförmige Fortsatz ist durch den Spalt zwischen Rückenlehne und Sitzpolster hindurchführbar und - nach dem Abziehen des Schutzstreifens - durch das adhäsive Mittel mit dem Schutzbezug oder Teilen des Kraftfahrzeugsitzes verbindbar.

DE 199 23 889 C2 der Anmelderin schlägt vor, die Rücklage zumindest teilweise aus einer elastischen, rückstellfähigen Kunststofffolie herzustellen, wobei diese eine elastische Dehnung von zumindest 50 % besitzen kann. Hierdurch kann insbesondere ein wiederholtes Abnehmen und Wiederanlegen des Schutzbezuges an einen oder unterschiedliche Kraftfahrzeugsitze gewährleistet werden. Andererseits ermöglicht die Elastizität der Rücklage einen strammen Sitz des Schutzbezuges an dem Kraftfahrzeugsitz. Auch kann durch die Elastizität der Schutzbezug grundsätzlich kleiner hergestellt werden als ein Schutzbezug ohne elastische Elemente, wodurch ein exaktes Anlegen des Schutzbezuges an den Kraftfahrzeugsitz unter Vorspannung, unter Umständen unter Vermeidung überhängender Folienbereiche oder Falten, gewährleistet werden kann.

DE 100 35 975 A1 schlägt einen dreischichtigen Aufbau einer Kunststofffolie für einen Schutzbezug vor, wobei über die Schichten der Kunststofffolie die Reibungsverhältnisse beeinflusst werden können. Der Schutzbezug kann zusätzliche Befestigungsmittel wie Druckknöpfe, ein Klettband oder Ähnliches aufweisen, über die die Montage vereinfacht werden kann und/oder die Verbindung zwischen Schutzbezug und Kraftfahrzeugsitz gestärkt werden kann. Als Material für den Schutzbezug findet für sämtliche Schichten Polyolefin, beispielsweise Polyethylen, Einsatz.

US 2005/0236874 A1 offenbart eine schlingenartige Konstruktion, eine Hängematte oder eine Wiege, welche Einsatz finden soll für das sichere Halten eines Haustiers im Bereich eines Sitzes eines Kraftfahrzeugs. Hierbei ist eine massive, mattenartige Abdeckung mit einzelnen Panels gebildet, die miteinander vernäht sind. Auch Randbereiche dieser Matte sind aufwändig vernäht, wobei diese Verstärkungselemente beinhalten können. Eine derartige Matte erstreckt sich vollständig über eine Rückbank des Kraftfahrzeugs mit einem Mattenbereich, welcher die Rückenlehne durchgängig abdeckt, einem Mattenbereich, welcher die Sitzfläche vollständig abdeckt sowie einem Mattenbereich, welcher sich durchgängig durch den Fußraum des Kraftfahrzeugs erstreckt. Zur seitlichen Abdeckung der Rückbank sind seitliche Überstände der Matte über einen Reißverschluss miteinander verbunden.

Weiterer Stand der Technik ist aus DE 20 2005 003 311 U1 bekannt.

Übliche Anforderungen an gattungsgemäße Schutzbezüge sind
- eine einfache Handhabbarkeit derselben,
- ein geringer Preis,
- eine einfache Lagerbarkeit, Transportierbarkeit und Bereitstellungsmöglichkeit derselben,
- deren einfache und u. U. umweltverträgliche Entsorgung,
- deren Haltbarkeit im Einsatz,
- deren zuverlässige Anbindung an den Kraftfahrzeugsitz
- und Ähnliches.

### AUFGABE DER ERFINDUNG

Der vorliegenden Erfindung liegt die Aufgabe zugrunde, einen Schutzbezug, wie dieser beispielsweise aus dem Stand der Technik bekannt ist, und eine Bahn mit mehreren Schutzbezügen durch alternative oder kumulative Maßnahmen weiterzubilden, insbesondere derart, dass
- eine verbesserte Schutzwirkung des Schutzbezuges,
- eine einfache Handhabbarkeit für den Benutzer des Schutzbezuges,
- eine gute Sicherung von Teilen des Schutzbezuges gegenüber unerwünschten Bewegungen relativ zum Kraftfahrzeugsitz und/oder
- eine vereinfachte Abgabe und Bereitstellung eines Schutzbezuges an den Benutzer
gewährleistet ist.

### LÖSUNG

Die Aufgabe der Erfindung wird erfindungsgemäß mit einem Schutzbezug gemäß den Merkmalen des unabhängigen Patentanspruchs 1 gelöst. Weitere Ausgestaltungen eines erfindungsgemäßen Schutzbezuges ergeben sich entsprechend den abhängigen Patentansprüchen 2 bis 17. Eine weitere Lösung der der Erfindung zugrunde liegenden Aufgabe stellt eine Bahn mit den Merkmalen des Patentanspruchs 18 dar. Weitere Ausgestaltungen einer erfindungsgemäßen Bahn mit mehreren Schutzbezügen sind in den abhängigen Patentansprüchen 19 bis 22 definiert.

### BESCHREIBUNG DER ERFINDUNG

Die vorliegende Erfindung ist geeignet, für einen beliebigen Schutzbezug eingesetzt zu werden, der beispielsweise entsprechend dem eingangs erläuterten Stand der Technik ausgebildet sein kann oder abweichend hierzu und für einen einmaligen oder mehrfachen Gebrauch bestimmt und hergerichtet sein kann.

Bisher ist die Fachwelt vorrangig dem Vorurteil gefolgt, dass ein gattungsgemäßer Schutzbezug lediglich einem Abdecken eines Kraftfahrzeugsitzes dienen kann. Soll zusätzlich zu einem Schutz des Kraftfahrzeugsitzes gewährleistet werden, dass ein Fußraum des Kraftfahrzeuges ebenfalls vor Verunreinigungen geschützt werden soll, beispielsweise vor Partikeln oder Verschmutzungen, beispielsweise Öl, die sich an der Sohle eines Schuhs eines Fahrers oder Monteurs abgelagert haben, wurde hierzu eine separate Fußraum-Abdeckung eingesetzt. Dieses erfordert bereits bei der Herstellung u. U. die separate Herstellung des Schutzbezuges einerseits und der Fußraum-Abdeckung andererseits. Auch hat eine separate Verpackung, ein separater Transport und eine separate Bereitstellung zu erfolgen. Weiterhin hat auch der Benutzer zwei separate Teile, nämlich einerseits den Schutzbezug und andererseits die Fußraum-Abdeckung, nacheinander in dem Kraftfahrzeug anzuordnen, weshalb zunächst der Schutzbezug für den Kraftfahrzeugsitz von einem Ablageort zu holen ist und mit dem Kraftfahrzeugsitz zu verbinden ist. Dann muss die Fußraum-Abdeckung von einem weiteren Ablageort geholt werden und anschließend in dem Fußraum angeordnet werden.

Die vorliegende Erfindung beschreitet den Weg, einen Schutzbezug vorzuschlagen, welcher sowohl einen Sitzbereich aufweist, der der zumindest teilweisen Abdeckung eines Kraftfahrzeugsitzes des Kraftfahrzeuges dient, als auch einen Fußbereich, der der zumindest teilweisen Abdeckung eines Fußraumes des Kraftfahrzeuges dient. Hierbei ist der Fußbereich mit dem Sitzbereich verbunden.

Selbstverständlich kann der Schutzbezug nicht nur in dem Kraftfahrzeug Einsatz finden, wo der Fußbereich der Abdeckung des Fußraumes dient. Vielmehr kann der Schutzbezug auch beispielsweise während eines Transportes des Kraftfahrzeugsitzes Einsatz finden, wo der Fußbereich ohne Funktion ist. In diesem Fall kann der Fußbereich gelöst oder abgerissen werden, was insbesondere über Perforationen des Übergangsbereiches vom Fußbereich zum Sitzbereich vorbereitet sein kann, oder ohne weitere Funktion mit dem Sitzbereich verbunden bleiben und beispielsweise zurückgebunden oder zurückgefaltet werden oder über einen Klebestreifen an einem anderen Teil befestigt werden. In alternativer Ausgestaltung kann bei einem Transport vom Sitzhersteller zur Montagelinie der Kraftfahrzeugsitz durch den Schutzbezug geschützt werden. Nach der Montage des Kraftfahrzeugsitzes im Fahrzeug wird der Fußbereich nachträglich ausgeklappt und dient dann dem Schutz des Fußraumes.

Die erfindungsgemäße Ausgestaltung führt auf die folgenden alternativen oder kumulativen Vorteile:
- Für die separate Ausbildung von Sitzbereich und Fußbereich verbleibt u. U. eine Stirnfläche des Sitzpolsters oder eine Stirnseite des Unterbaus des Sitzpolsters ohne Abdeckung, so dass hier keine Schutzfunktion gewährleistet ist. Schlimmstenfalls kann es passieren, dass Werkzeug, Schrauben oder Ähnliches unbeabsichtigt in einen Hohlraum unter den Sitz eintreten oder eine Verschmutzung stirnseitiger Bereiche des Unterbaus auftritt. Erfindungsgemäß kann auch in diesem stirnseitigen Bereich eine zusätzliche Abdeckung geschaffen werden, wodurch die Schutzfunktion des Schutzbezuges erweitert ist.
- Für die separate Ausbildung von Sitzbereich und Fußbereich ist die relative Lage zwischen Sitzbereich und Fußbereich beliebig, was beispielsweise dazu führen kann, dass ein Fahrer des Kraftfahrzeuges für mehrmals bewegten Fuß, beispielsweise bei einer Betätigung der Pedale des Kraftfahrzeuges, den Fußbereich in den vorderen Endbereich des Fußraumes verschiebt, wo die Fußraum-Abdeckung ihre Funktion nicht erfüllen kann. Schlimmstenfalls kann die zusammengeschobene Fußraum-Abdeckung die Betätigung der Pedale des Kraftfahrzeuges beeinträchtigen, was ein Sicherheitsrisiko für das unter Umständen neuwertige Kraftfahrzeug darstellt. Durch die erfindungsgemäße Verbindung von Fußbereich und Sitzbereich ist die Verschiebemöglichkeit des Fußbereiches gegenüber dem Sitzbereich in Richtung der Fahrzeuglängsachse nach vorne begrenzt, wodurch die genannten Probleme beseitig oder gemindert sind.
- Für die separate Ausbildung von Sitzbereich und Fußbereich ist die Zahl der Montageschritte für den Benutzer oder Monteur erhöht. Da der Einsatz eines Schutzbezuges von dem Monteur unter Umständen als ein lästiger Zusatzschritt angesehen wird, der dem eigentlichen angestrebten Arbeitsergebnis des Monteurs aber nicht förderlich ist, ist die Gefahr gegeben, dass der Monteur auf die Anordnung der Fußraum-Abdeckung für die separate Ausbildung derselben verzichtet. Ein derartiges Fehlverhalten des Monteurs kann erfindungsgemäß vermieden werden, da die Fußraum-Abdeckung in Form des Fußbereiches nach der Montage des Sitzbereiches des Schutzbezuges an dem Kraftfahrzeugsitz ohnehin vorhanden ist, und zwar bereits ohne ergänzende Montageschritte, bspw. durch ein schnelles Ausfalten und/oder Glattstreichen des Fußbereiches.
- Gleiches gilt für eine Entfernung des Schutzbezuges aus dem Kraftfahrzeug, welche für die erfindungsgemäße Ausgestaltung - im Gegensatz zu der separaten Ausbildung von Fußraum-Abdeckung und Sitzbereich - lediglich einen Entnahmeschritt bedingt.
- Auch besteht potentiell die Gefahr, dass eine Fußraum-Abdeckung an dem Schuh eines Monteurs anhaftet, beispielsweise durch einen spitzen Gegenstand in der Sohle des Schuhs des Monteurs oder ein adhäsives Mittel an der Sohle des Monteurs. Verlässt der Monteur das Fahrzeug, muss der Monteur die ungewollte Entnahme der Fußraum-Abdeckung aus dem Fußraum dadurch vermeiden, dass er sich bückt und die Fußraum-Abdeckung von der Sohle abstreift. Dieses kann unter Umständen erfindungsgemäß vermieden werden, da eine Entnahme des Fußbereiches durch die Verbindung desselben mit dem Sitzbereich erschwert ist.

Gemäß der Erfindung ist der Schutzbezug mit einer Vorderlage und einer Rücklage gebildet. Der Fußbereich bildet hierbei einen Teilausschnitt aus der Rücklage. Von besonderem Vorteil ist hierbei, wenn der Fußbereich aus der Rücklage derart ausgeklappt wird, dass die der Vorderlage zugewandte Oberfläche der Rücklage einerseits die Anlagefläche der Rücklage an den Kraftfahrzeugsitz bildet und andererseits eine Unterseite des Fußbereiches für Anordnung desselben in dem Fußraum bildet. Damit kann gewährleistet werden, dass die genannte Oberfläche sowohl für den Sitzbereich als auch für den Fußbereich eine Kontaktfläche zu den geschützten Bereichen, nämlich einerseits den Kraftfahrzeugsitz und andererseits den Fußraum, bildet, so dass für diese Oberflächen für Sitzbereich und Fußbereich vergleichbare Anforderungen gelten. Beispielsweise kann diese Oberfläche mit einer hohen Rauhigkeit versehen werden, um Relativbewegungen zwischen Rücklage und Kraftfahrzeugsitz sowie Fußraum zu vermeiden. Gleiches gilt für die andere Oberfläche der Rücklage, die damit einerseits von dem Benutzer im Bereich des Kraftfahrzeugsitzes zugänglich ist und insbesondere reibungsarm gestaltet sein kann und andererseits von den Füßen des Benutzers im Bereich des Fußraumes zugänglich ist.

Während gemäß dem Stand der Technik als Fußraum-Abdeckung vorrangig Papier oder einen Karton Einsatz findet, wird erfindungsgemäß der Einsatz beliebiger Materialien, insbesondere eine Folie, als eine Fußraumabdeckung in Betracht gezogen.

Während grundsätzlich eine separate Ausbildung von Fußbereich und Sitzbereich möglich ist, wobei dann eine Verbindung von Fußbereich und Sitzbereich über geeignete Verbindungselemente, beispielsweise Klebestreifen, Klettverbindungen, Verbindungsstreifen, die miteinander verknotet werden, und Ähnliches erfolgt, ist vorzugsweise der Sitzbereich einstückig mit dem Fußbereich ausgebildet, wobei hierunter auch eine Herstellung von Sitzbereich und Fußbereich aus einem einzigen durchgehenden Material oder einer Kunststofffolie verstanden wird oder die separate Fertigung von Sitzbereich und Fußbereich mit anschließender stoffschlüssiger Verbindung, beispielsweise über eine Schweißverbindung oder ein adhäsives Mittel.

Eine besonders einfache Fertigung ergibt sich für den erfindungsgemäßen Schutzbezug, wenn der Sitzbereich und der Fußbereich aus einer einzigen Folie hergestellt sind. Hierbei besitzt die Folie einen Einschnitt, der über mindestens ein geeignetes Schneidelement mechanisch oder thermisch in die Folie eingebracht sein kann. Dieser einfach herzustellende Einschnitt erfüllt zwei Funktionen:
- Einerseits begrenzt der Einschnitt den Fußbereich, so dass aus der Folie mit Einbringen des Einschnittes der Fußbereich herausgetrennt werden kann, der dann beispielsweise vor einer Verpackung oder nach Entnahme des Schutzbezuges abgeklappt oder abgefaltet wird, so dass sich dieser in dem Kraftfahrzeug vor dem Sitzbereich erstreckt.
- Andererseits wird durch den Einschnitt eine Ausnehmung des Sitzbereiches begrenzt, bei der es sich vorzugsweise um die Ausnehmung aus der Rücklage des Sitzbereiches handelt, welche rückseitig die mindestens eine Tasche begrenzt und/oder seitliche Verbindungsstreifen begrenzt, die seitlich den Kraftfahrzeugsitz umschließen können. Mit dem Abklappen des Fußbereiches wird die Ausnehmung freigelegt, die dann dazu dienen kann, den Sitzbereich mit einer oder zwei Taschen und/oder Seitenstreifen über den Kraftfahrzeugsitz zu stülpen. Bei der "einzigen Folie" kann es sich selbstverständlich auch um einer coextrudierte Folie handeln, die mehrere Schichten besitzt. Der Einschnitt kann als durchgehender Schnitt, beispielsweise mit einem oder mehreren Messern, eingebracht werden oder über mehrere Teilschnitte oder mindestens einer Perforation. Alternativ zu dem mindestens einen genannten Messer kann ein Stanzwerkzeug Einsatz finden. Von der Formulierung "einzige Folie" auch umfasst sein sollen Ausführungsformen, bei denen der Fußbereich und der Sitzbereich im Wesentlichen aus dieser Folie hergestellt sind, aber ergänzende Elemente für zusätzliche Taschen, Befestigungselemente und Ähnliches unter Umständen aus weiteren Folien oder anderen Materialien hergestellt sind.

In den aus dem Stand der Technik bekannten Lösungen besteht die Fußraum-Abdeckung aus einem anderen Material als der Sitzsschutz. Bei der Entsorgung ist ein sortenreines Recycling deshalb nur bedingt oder mit erhöhtem Aufwand möglich, wobei u. U. getrennte Entsorgungswege für die Fußraum-Abdeckung einerseits und den Schutzbezug andererseits vorzusehen sind. Hier schafft die erfindungsgemäß Ausgestaltung mit der einstückigen Ausbildung, bei der sowohl Fußbereich als auch Sitzbereich mit einer Folie gebildet sind, Vereinfachung.

Eine entsprechend einer Weiterbildung des erfindungsgemäßen Schutzbezuges in erster Näherung U-förmige, V-förmige, T-förmige oder parabelförmige Ausbildung des Einschnittes kann auf einfache Weise gefertigt werden. Andererseits stellen U-förmige, V-förmige, T-förmige oder parabelförmige Einschnitte geeignete Ausnehmungen für den Sitzbereich bereit für eine einfache Montierbarkeit und zuverlässige Verbindung zwischen Sitzbereich und Kraftfahrzeugsitz. Gleichzeitig wird durch derartige Einschnitte ein Fußbereich begrenzt, der den Gegebenheiten im Fußraum und von den Füßen beaufschlagten Teilbereichen desselben Rechnung trägt. Unter einer U-Form wird in diesem Zusammenhang eine Form verstanden, bei welcher zwei ungefähr parallele Seitenschenkel vorhanden sind, die über einen geradlinigen oder beliebig gekrümmten Verbindungsbereich miteinander verbunden sind. Durchaus möglich ist, dass auch die Seitenschenkel des U nicht geradlinig ausgebildet sind, sondern beliebig kurvenförmig. Im Gegensatz hierzu wird unter einer V-Form eine Ausbildung mit spitz zulaufenden Seitenschenkeln verstanden, die geradlinig oder kurvenförmig ausgebildet sein können, wobei der Verbindungsbereich der Seitenschenkel spitz oder abgerundet ausgebildet sein kann. Unter einer T-Form wird eine Hammer-Form verstanden, bei welcher der Einschnitt beidseits des Vertikalschenkels des T bzw. des Hammerstieles verläuft sowie um den Querschenkel des T bzw. den Hammerkopf. Der Querschenkel des T kann dann für den Fußbereich eine verbreiterte Aufstandsfläche für den Fuß und Schutzfläche in dem Fußraum bereitstellen, während der Vertikalschenkel des T vorrangig der Anbindung des Querschenkels an den Sitzbereich dienen kann. Eine Ausgestaltung der gewählten Kurvenformen kann abhängen von der Art der Einbringung des Einschnittes: Während quer zu einer Förderrichtung des Schutzbezuges während der Herstellung orientierte Teilbereiche des Einschnittes eher eine Taktförderung erfordern, bei der dann ein "Einstanzen" des Einschnittes oder ein zeitlich andauerndes Einschneiden des Einschnittes erfolgt, können gegenüber der Querrichtung geneigte Einschnitte beliebiger Form auch während einer kontinuierlichen Förderung des Schutzbezuges unter Einsatz eines temporär in den Schutzbezug eintauchenden Schneidelementes erzeugt werden. Hierbei kann das Schneidelement durch die Förderbewegung des Schutzbezuges relativ zu diesem bewegt und ergänzend in Querrichtung bewegt werden.

Von weiterem Vorteil kann es sein, wenn Lagen des Schutzbezuges mit unterschiedlichen Materialien, Zusammensetzungen, Additiven, Beschichtungen, mechanischen Eigenschaften wie Elastizitäten und Festigkeiten, Reibwerten und/oder Rauhigkeiten gebildet sind. Hierdurch kann gezielt das Verhalten des Schutzbezuges sowohl für den Fußbereich als auch für den Sitzbereich gestaltet werden.

Entsprechend einem weiteren erfindungsgemäßen Vorschlag ist ein Verbindungsbereich zwischen Fußbereich und Sitzbereich, welcher beispielsweise durch eine Abknickstelle zwischen Fußbereich und Sitzbereich repräsentiert sein kann, nicht in dem Übergangsbereich von der Vorderlage zu der Rücklage angeordnet, beispielsweise im Bereich einer Faltung zwischen diesen oder einer Verschweißung zwischen diesen, sondern beabstandet von diesem Übergangsbereich angeordnet. Das zwischen Verbindungsbereich und Übergangsbereich angeordnete Material kann zur Bildung einer Tasche genutzt werden. Andererseits wird unter Umständen mittels einer derartigen Tasche der Verbindungsbereich unter dem Sitzpolster etwas zurückgeführt, so dass der Fußbereich hier unmittelbar an einen Unterbau des Kraftfahrzeugsitzes herangeführt werden kann und weniger sichtbar wird. Vorzugsweise beträgt der Abstand zwischen Verbindungsbereich und Übergangsbereich zwischen 5 und 40 cm oder 10 und 25 cm.

Eine besonders einfache Fertigung des Schutzbezuges ergibt sich dann, wenn dieser aus einem schlauchartigen Material gefertigt ist, wobei beispielsweise ein einfacher Schlauch oder ein Seitenfaltenschlauch Einsatz finden kann, welcher als Vollschlauch oder Halbschlauch für den Schutzbezug verwendet werden kann. Erfindungsgemäß bildet das schlauchartige Material mit dessen Abplattung die Vorderlage und Rücklage, wobei die genannten Lagen in einem oberen Endbereich sowie in einem unteren Endbereich über Querschweißungen miteinander verbunden sind. Die Querschweißungen verbinden die Lagen miteinander. Bereits hierdurch ist für die Verwendung eines Vollschlauches unter Umständen ein allseits geschlossener "Sack" gebildet, der durch Einbringung des Einschnittes wieder geöffnet wird. Im Fall des Einsatzes eines Halbschlauches kann eine ergänzende Längsschweißung erforderlich sein, um den allseits geschlossenen "Sack" zu bilden. Der Einsatz eines Seitenfaltenschlauches kann vorteilhaft genutzt werden, um eine Art "Taillierung" des Schutzbezuges herbeizuführen, indem in Teilbereichen des Schutzbezuges, insbesondere im Bereich einer Kopfstütze, die Seitenfalten zumindest bereichsweise durch eine Verschweißung festgesetzt sind, während in anderen Teilbereichen ein vergrößerter Querschnitt des Schlauches durch die geöffneten Seitenfalten zu nutzen. Ein derart "taillierter" Schutzbezug passt sich besser an einen Kraftfahrzeugsitz an und kann beispielsweise eine gegenüber dem Kraftfahrzeug verringerte Erstreckung einer Kopfstütze berücksichtigen. Gleichzeitig kann die Taillierung die ordnungsgemäße und exakte Montage des Schutzbezuges auf dem Kraftfahrzeugsitz vereinfachen. Vorzugsweise entsteht die Taillierung im Bereich einer unteren und/oder oberen Querschweißung, wobei die obere Querschweißung der Taillierung des oberen Endbereichs und damit der Rückenlehne und der Kopfstütze zugeordnet ist, während die Taillierung im Bereich der unteren Querschweißung einer Taillierung im Bereich der Vorderseite des Sitzpolsters dient.

Für einer Fertigung des Schutzbezuges kann es von Vorteil sein, wenn die Querschweißungen benachbart zu Perforationen angeordnet sind, so dass unter Umständen Querschweißungen und Perforationen in einem oder in benachbarten Verfahrensschritten in den Schutzbezug eingebracht worden sein können. Die Perforationen dienen einer Fertigung des Schutzbezuges aus einem bahnartigen Material, wobei einzelne Schutzbezüge durch Auseinanderreißen der Perforationen voneinander getrennt werden können.

Für eine Weiterbildung des erfindungsgemäßen Schutzbezuges besitzt das mindestens eine Material des Schutzbezuges zumindest in Teilbereichen auf unterschiedlichen Seiten unterschiedliche Rauhigkeiten und/oder Reibwerte. Für die Ausbildung des Schutzbezuges mit Vorderlage und Rücklage hat es sich bewährt, dass eine Rauhigkeit bzw. ein Reibwert auf den einander zugewandten Oberflächen der Lagen kleiner ist als auf den einander abgekehrten Oberflächen. Eine Beeinflussung der Reibwerte kann beispielsweise durch Wahl der Materialien unterschiedlicher Schichten der Lagen erfolgen und/oder durch gezielte Applikation eines Gleitmittels auf die Oberflächen oder zur dem die Oberfläche bildenden Material.

Darüber hinaus schlägt die Erfindung vor, dass auf dem Schutzbezug optische Hinweise vorgesehen sind für einen ordnungsgemäßen Gebrauch. Derartige Hinweiselemente können beispielsweise
- eine Montagereihenfolge indizieren,
- eine Stülprichtung von Taschen des Schutzbezuges anzeigen,
- Falt- oder Klapprichtungen für ein Herausklappen des Fußbereiches anzeigen oder
- eine Unterscheidung des Sitzbereiches von dem Fußbereich ermöglichen.

Entsprechend einem besonderen Vorschlag der Erfindung sind auf dem Fußbereich optisch gekennzeichnete Fußabdrücke als Hinweiselemente vorgesehen, die einerseits den Fußbereich als solchen indizieren und andererseits anzeigen können, wo ungefähr dieser Teilbereich des Schutzbezuges in dem Kraftfahrzeug anzuordnen ist.

Ebenfalls möglich ist, dass Fixierelemente an dem Schutzbezug vorgesehen sind, die eine Fixierung des Fußbereiches gegenüber dem Fußraum des Kraftfahrzeuges ermöglichen. Hierbei kann bspw. der Einsatz
- einer Art Klett-Verschluss zur Verbindung des Fußbereiches mit einer Fußmatte,
- von Umschlaglappen oder Taschen für eine Verbindung mit einer Fußmatte oder
- von Verbindungsstreifen, welche im Fußraum befestigt oder angebunden werden können,
erfolgen. Ebenfalls möglich ist das Aufbringen von zwei Klebestreifen mit entsprechender Abdeckung, die für den Fall der gewünschten Befestigung an den Pedalen entfernt werden können. Der Fußbereich kann dann über je einen Klebestreifen angeklebt werden, beispielsweise an eine Fußmatte, wobei sich die Klebestreifen auf der Fußmatte vom Kraftfahrzeugsitz in Richtung der Pedale erstrecken können. Ebenfalls denkbar ist die Verbindung der Klebestreifen mit den Pedalen. Entsprechendes kann durch Klebeetiketten oder Klebepunkte erreicht werden. Eine derartige Befestigung ist insbesondere dann denkbar, wenn der Schutzbezug nicht aus einem Schlauch produziert wird, sondern vielmehr eine Rücklage separat hergestellt wird. Auf eine derartige Rücklage kann ein entsprechender "Hotmelt" aufgebracht werden, der dann durch die Abdeckung, einen sogenannten "Releasestreifen" abgedeckt wird, bevor eine Verbindung von Vorderlage und Rücklage erfolgt. Durch die genannten Verbindungen kann der Fußbereich des Schutzbezuges auch gegenüber einem seitlichen Verrutschen geschützt werden.

Eine weitere Lösung der der Erfindung zugrundeliegenden Aufgabe ist gegeben durch eine Bahn, die mehrere der zuvor beschriebenen Schutzbezüge beinhaltet. Die Schutzbezüge sind jeweils über Perforationen miteinander verbunden. Im Bereich der Perforationen kann die Bahn durch Abreißen getrennt werden, wodurch die Schutzbezüge voneinander getrennt werden. Ein derartiges Abreißen kann insbesondere durch den Monteur im Bereich einer Abgabestation der Schutzbezüge erfolgen. Die Bahn mit mehreren Schutzbezügen kann vereinfacht transportiert und bereitgestellt werden, beispielsweise indem die Bahn zu einer Rolle aufgewickelt wird oder zu einem "Stapel" gefaltet wird. Eine Bereitstellung einer Bahn mit mehreren derartigen Schutzbezügen kann beispielsweise gemäß der in der Patentanmeldung DE 10 2004 016 269 B3 der Anmelderin offenbarten Bereitstellungsformen erfolgen, beispielsweise mittels einer Transport- und Spenderbox und einer in der genannten Patentanmeldung genannten Haltevorrichtung.

Für die Herstellung einer derartigen Bahn schlägt die Erfindung zwei alternative Herstellungsverfahren vor:
- Für ein erstes Herstellungsverfahren ist die Bahn mit einem schlauchartigen Material gebildet, welches ein einfacher Schlauch sein kann oder ein Seitenfaltenschlauch. Die Bahn ist mit Querschweißungen versehen, wobei jeweils zwei Querschweißungen einen Schutzbezug in Längsrichtung der Bahn begrenzen. Hiermit eine Art geschlossener "Sack" gebildet, wobei ein Schließen der Lagen durch die beiden Querschweißungen sowie die schlauchartige Ausbildung des Materiales erfolgt. Zwischen die Querschweißungen wird dann der Einschnitt in eine Lage, vorzugsweise die Rücklage, der Bahn eingebracht, der in erster Näherung U-, V- oder T-förmig ausgebildet ist.
   Weiterhin ist eine Fertigung entsprechend einem ersten Herstellungsverfahren derart ermöglicht, dass der Einschnitt mit der U-, V- oder T-Form in der Richtung der Längsachse der Bahn orientiert ist. In diesem Fall bilden die Querschweißungen in einem auf dem Fahrzeug montierten Zustand des Schutzbezuges eine obere Begrenzung des Schutzbezuges, welcher also im Bereich des oberen Endbereiches der Rückenlehne angeordnet ist, sowie eine untere Begrenzung des Schutzbezuges, die im Bereich der vorderen Kante des Sitzpolsters angeordnet ist.
- Für ein alternatives Herstellungsverfahren ist der U-, V- oder T-förmige Einschnitt quer zur Längsachse der Bahn orientiert. In diesem Fall bilden die genannten Querschweißungen in einem auf dem Fahrzeugsitz montierten Zustand des Schutzbezuges seitliche Begrenzungen des Schutzbezuges.

Es ist darauf hinzuweisen, dass der erfindungsgemäße Schutzbezug nicht zwingend sowohl ein Sitzpolster als auch eine Rückenlehne abdecken muss. Vielmehr kann die erfindungsgemäße Ausgestaltung auch dann Einsatz finden, wenn der Schutzbezug lediglich ein Sitzpolster und den Fußraum abdecken soll.

Vorteilhafte Weiterbildungen der Erfindung ergeben sich aus den Patentansprüchen, der Beschreibung und den Zeichnungen. Die in der Beschreibungseinleitung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt einen erfindungsgemäßen Schutzbezug in einer Draufsicht, wobei der über einen U-förmigen Einschnitt der Rücklage begrenzte Fußbereich aus dem Sitzbereich abgeklappt ist.
- **Fig. 2**: zeigt einen Schnitt II-II bei der in Fig. 1 gekennzeichneten Schnittführung.
- **Fig. 3**: zeigt einen Kraftfahrzeugsitz mit einem erfindungsgemäßen Schutzbezug in einer Seitenansicht.
- **Fig. 4**: zeigt den Kraftfahrzeugsitz mit Schutzbezug gemäß Fig. 3 in einer Vorderansicht.
- **Fig. 5**: zeigt einen Teilausschnitt einer Bahn mit mehreren Schutzbezügen, wobei ein U-förmiger Einschnitt in Richtung der Längsachse der Bahn in diese eingebracht ist.
- **Fig. 6**: zeigt einen Teilausschnitt einer Bahn mit mehreren Schutzbezügen, wobei ein T-förmiger Einschnitt quer zur Längsachse der Bahn in diese eingebracht ist.
- **Fig. 7**: zeigt einen weiteren erfindungsgemäßen Schutzbezug in einer rückwärtigen Ansicht, wobei der über einen U-förmigen Einschnitt der Rücklage begrenzte Fußbereich nicht aus dem Sitzbereich abgeklappt dargestellt ist und die Rücklage mit drei Teilbereichen mit zwei unterschiedlichen Folienmaterialien gebildet ist.

### FIGURENBESCHREIBUNG

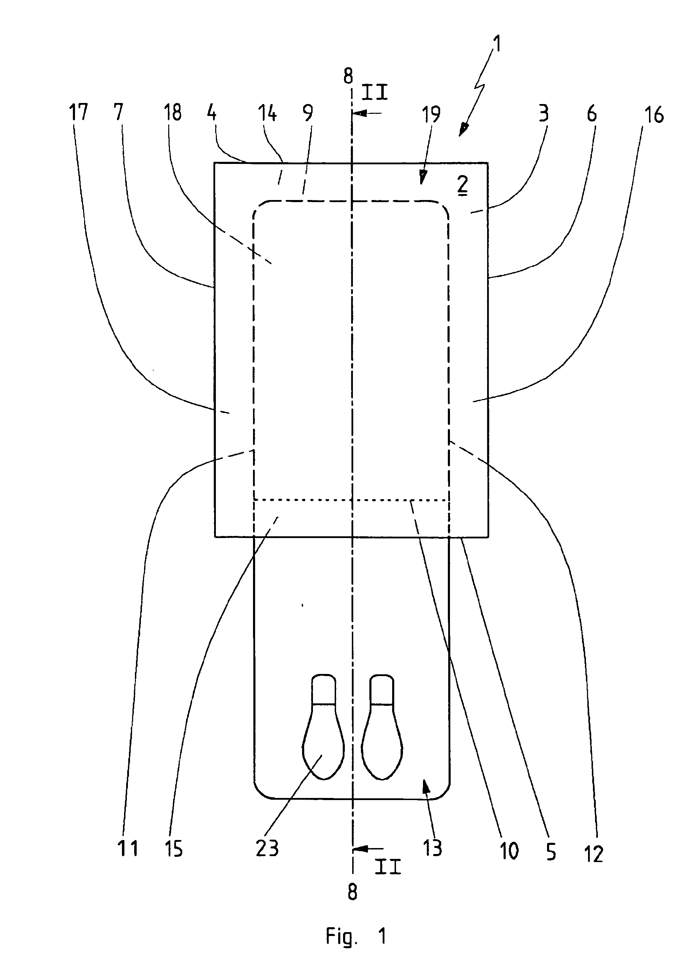

**Fig. 1** zeigt einen Schonbezug 1 aus einer Kunststofffolie in einem flach liegenden Zustand. Der Schonbezug 1 besitzt eine Vorderlage 2 sowie eine in Fig. 1 teilweise unter der Vorderlage 2 liegende Rücklage 3. Die Vorderlage 2 und Rücklage 3 sind im Bereich einer oberen Begrenzung 4, einer unteren Begrenzung 5 und der seitlichen Begrenzungen 6, 7 miteinander verbunden, so dass eine Art allseits geschlossener "Sack" gebildet ist. Die Begrenzungen 4-7 können durch eine Faltung einer Folie gebildet sein, die sowohl die Vorderlage 2 als auch die Rücklage 3 bildet, und/oder in Form einer Verschweißung. In dem in Fig. 1 dargestellten flach liegenden Zustand besitzt der "Sack" eine rechteckige Grundgeometrie mit einer Längsachse 8-8, wobei die Längsachse in montiertem Zustand des Schutzbezuges 1 entsprechend der Krümmung des Kraftfahrzeugsitzes gekrümmt ist und mit Symmetrieachsen des Sitzpolsters und der Rückenlehen des Kraftfahrzeugsitzes korreliert. In die Rücklage 3 ist ein für diese Ausführungsform ungefähr U-förmiger Einschnitt 9 eingebracht, wobei das U in Richtung der unteren Begrenzung 5 geöffnet ist. Das Innere des U-förmigen Einschnittes 9 ist aus den weiteren Bereichen der Rücklage 3 um einen Verbindungsbereich 10 herausgeklappt. In dem hier dargestellten Ausführungsbeispiel ist der Verbindungsbereich 10 als Verbindungsgerade ausgebildet, die Seitenschenkel 11, 12 des U-förmigen Einschnittes 9 miteinander verbindet. Das derart umgefaltete oder umgeklappte Innere des Einschnittes 9 bildet einen zungenartigen oder lappenartigen Fußbereich 13. Abseits des Fußbereiches 13 bildet die Rücklage 3 einen oberen Taschenbereich 14, einen unteren Taschenbereich 15 sowie seitliche Verbindungsbereiche 16, 17. Mit dem Herausklappen des Fußbereiches begrenzen die Bereiche 14-17 eine Ausnehmung 18 der Rücklage 3. Ein Sitzbereich 19 des Schutzbezuges 1 ist mit der gesamten Vorderlage 2 sowie den Bereichen 14-17 gebildet. Der Sitzbereich kann über einen Kraftfahrzeugsitz 20 gestülpt werden, wobei der obere Taschenbereich 14 den oberen Endbereich einer Rückenlehne 21 aufnehmen kann, während der untere Taschenbereich 15 den vorderen Endbereich eines Sitzpolsters 22 umschließen kann. Auf den Fußbereich 13, hier auf die Außenseite der Rücklage 3, sind Hinweiselemente 23 aufgedruckt, bei denen es sich für das in Fig. 1 dargestellte Ausführungsbeispiel um Fußstapfen handelt.

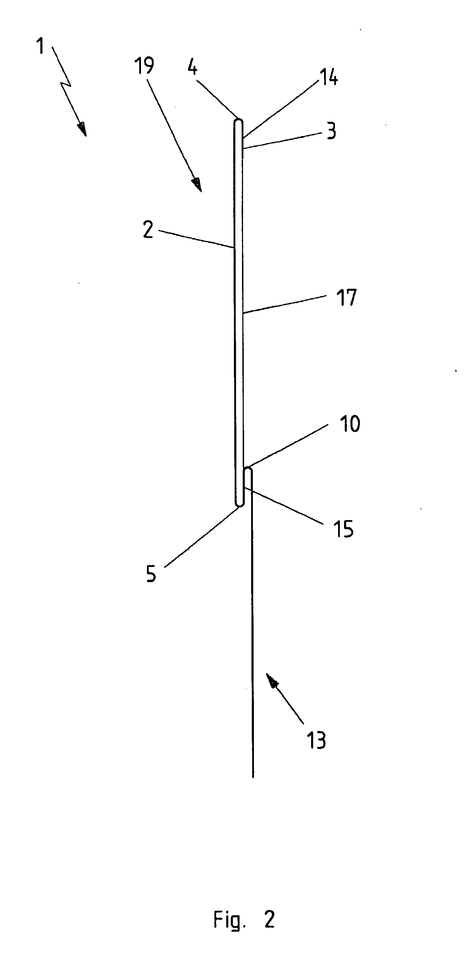

Aus dem in Fig. 2 dargestellten Längsschnitt ist ersichtlich, dass der Sitzbereich 19 in dem Querschnitt in Form eines abgeplatteten C ausgebildet ist, wobei die Vorderlage 2 den durchgehenden Vertikalschenkel des C bildet, der obere Taschenbereich 14 den oberen kurzen abgeplatteten Teilschenkel des C bildet sowie der untere Taschenbereich 15 den unteren abgeplatteten Teilschenkel des C bildet. Der Fußbereich 13 schließt an den freien Endbereich des unteren Teilschenkels des C mit dem Verbindungsbereich 10 an den Sitzbereich 19 in Form des abgeplatteten C an bei Ausrichtung parallel zum Vertikalschenkel des C und Erstreckung von dem Sitzbereich 19 weg. Zwischen den Endbereichen der abgeplatteten Teilschenkel des C, die durch die Taschenbereiche 14, 15 gebildet sind, erstreckt sich die Ausnehmung 18. In dem in Fig. 2 dargestellten Längsschnitt bildet die Vorderlage 2, der untere Taschenbereich 15 und der Fußbereich 13 einen S-förmigen Längsschnitt. Für einen entsprechenden Längsschnitt mit Schnittführung durch die Verbindungsbereiche 16, 17 ergibt sich ein Längsschnitt in Form eines abgeplatteten O.

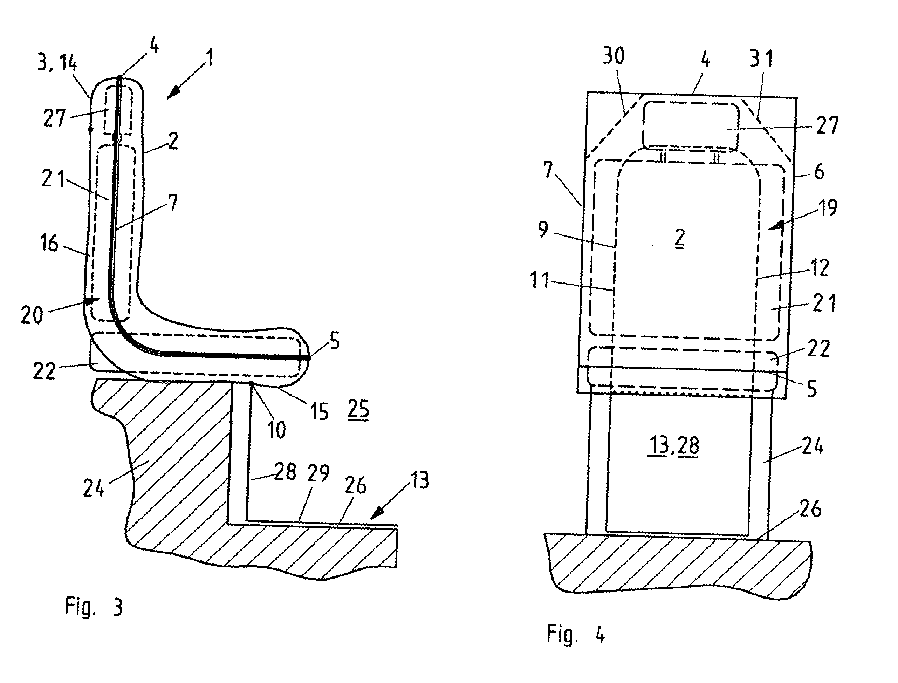

Fig. 3 zeigt zunächst den Kraftfahrzeugsitz 20, der mit einer Rückenlehne 21 und einem Sitzpolster 22 gebildet ist, auf einem entsprechenden Unterbau 24, sowie einen Fußraum 25 mit einem Fußboden 26. Gemäß Fig. 3 ist der Sitzbereich 19 in der Seitenansicht L-förmig über den Kraftfahrzeugsitz 20 gestülpt. Die Vorderlage 2 liegt an der Vorderseite der Rückenlehne 21 sowie der Oberseite des Sitzpolsters 22 an. Die seitlichen Begrenzungen 6, 7 befinden sich seitlich der Rückenlehne 21 und des Sitzpolsters 22. Der obere Taschenbereich 14 umschließt die Rückenlehne 21 bzw. eine Kopfstütze 27 derselben, während der untere Taschenbereich 15 den vorderen Endbereich des Sitzpolsters 22 umschließt. Die Verbindungsbereiche 16, 17 der Rücklage 2 umschließen zumindest Teilbereiche der Seitenflächen des Sitzpolsters 22 und der Rückenlehne 21. Der Verbindungsbereich 10 befindet sich in diesem montierten Zustand auf der Unterseite des Sitzpolsters 22, und zwar gegenüber dem vorderen Endbereich des Sitzpolsters 22 zurückversetzt. Der Fußbereich 13 bildet einen Verbindungsbereich 28 sowie einen Abdeckbereich 29. Der Abdeckbereich 29 liegt auf dem Fußboden 26 auf, während der Verbindungsbereich 28 den Abdeckbereich 29 mit dem Verbindungsbereich 10 und damit dem Sitzbereich 19 verbindet.

In Fig. 4 ist zu erkennen, dass der Schutzbezug 1 gemäß dem dargestellten Ausführungsbeispiel aus einem Seitenfaltenschlauch gefertigt ist, wobei Seitenfalten 30, 31 im Bereich der oberen Begrenzung fixiert sind, beispielsweise durch eine die obere Begrenzung 4 bildende Querschweißung. Dies hat zur Folge, dass die Seitenfalten im Bereich der oberen Begrenzung 4 nicht entfaltet werden können, während sich diese in Fig. 4 nach unten zunehmend entfalten. Dies hat eine Vergrößerung des Querschnittes des Sitzbereiches 19 nach unten zur Folge, wobei der Querschnitt für das in Fig. 4 dargestellte Ausführungsbeispiel ungefähr linear zunimmt. Hiermit kann der Sitzbereich 19 die Form der Rückenlehne 21 und der Kopfstütze 27 aproximieren, wobei die Seitenfalten 30, 31 mit nach oben abnehmendem Abstand während des Überstülpens des Sitzbereiches 19 über den oberen Endbereich der Rückenlehne 21 mit Kopfstütze 27 eine Art Führung oder Zentrierhilfe bilden können.

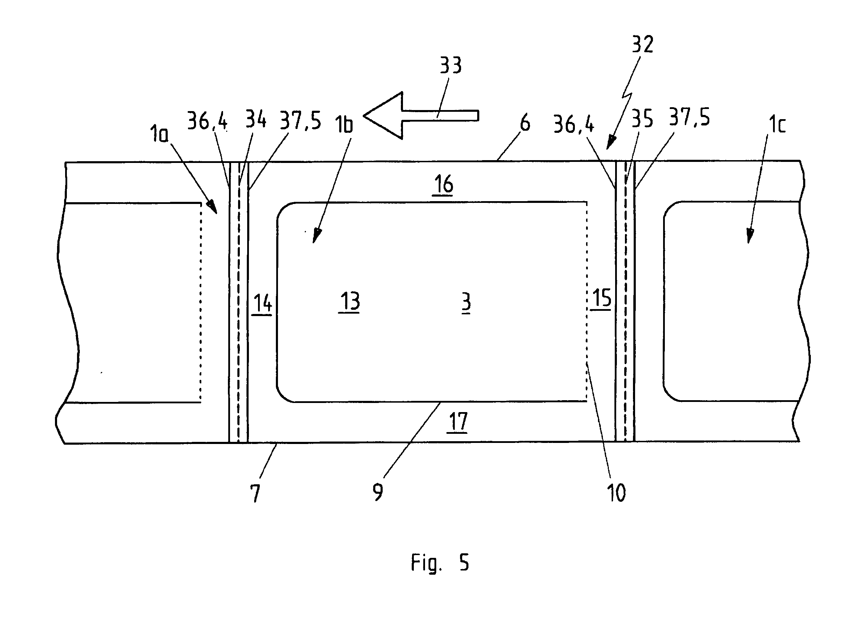

**Fig. 5** zeigt eine Bahn 32 eines kontinuierlichen abgeflachten Kunststoffschlauches, welcher bei der Herstellung in einer Förderrichtung 33 bewegt wird. In der Bahn 32 sind Schutzbezüge 1a, 1b, 1c durch quer zur Förderrichtung 33 orientierte, durchgehende Perforationen 34, 35 voneinander abtrennbar. Eng benachbart den Perforationen 34, 35 befinden sich beidseits der Perforationen 34, 35 Querschweißungen 36, 37, mit denen die obere Begrenzung 4 bzw. die untere Begrenzung 5 des Schutzbezuges 1 gebildet ist. Fig. 5 zeigt eine Ansicht der die Vorderlage 2 verdeckenden Rücklage 3 mit U-förmigen Einschnitten 9, welche in Richtung der Förderrichtung 33, also der Längsachse der Bahn 32 in die Bahn 32 eingebracht sind. Falten des schlauchartigen Materiales bilden die seitlichen Begrenzungen 6, 7.

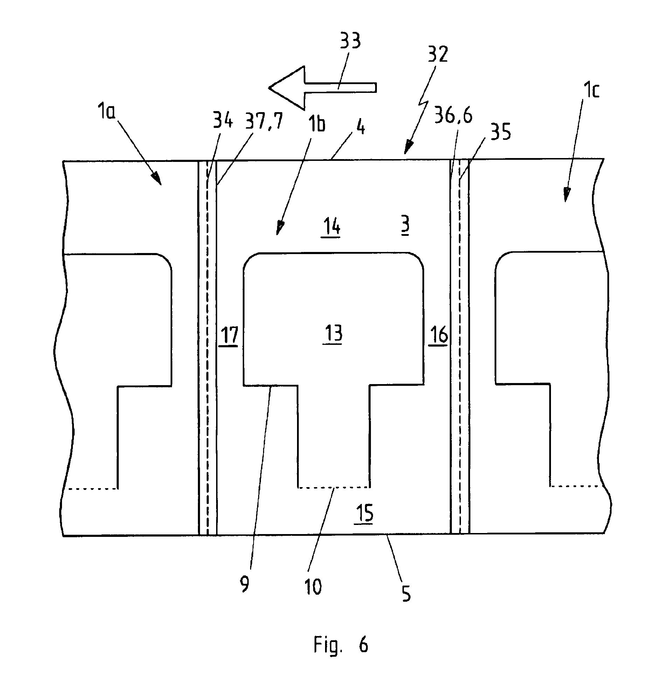

**Fig. 6** zeigt ein alternatives Herstellungsverfahren für eine Bahn 32 mit Schutzbezügen 1 a, 1b, 1 c. Auch in diesem Fall ist die Bahn 32 mit einem schlauchartigen Material gebildet, wobei allerdings die Falten in Folge der Abflachung des schlauchartigen Materiales die obere Begrenzung 4 und die untere Begrenzung 5 bilden. In der Bahn 32 sind die einzelnen Schutzbezüge 1 a, 1b, 1 c durch Perforationen 34, 35 voneinander abtrennbar. Unmittelbar benachbart den Perforationen 34, 35 befinden sich Querschweißungen 36, 37, die in diesem Fall die seitlichen Begrenzungen 6, 7 bilden. Ein hier T-förmiger Einschnitt 9 ist mit Ausrichtung quer zur Förderrichtung 33 bzw. Längserstreckung der Bahn 32 in die Rücklage 3 eingebracht.

Für die in den Fig. 5 und 6 dargestellten Herstellungsverfahren können selbstverständlich beliebige anderweitige Einschnitte 9, beispielsweise U-, V-, T- oder parabelförmige Einschnitte 9 Einsatz finden. Während gemäß Fig. 5 eine Längsachse des Schutzbezuges 1 mit der Längserstreckung der Bahn 32 übereinstimmt, ist für das in Fig. 6 dargestellte Ausführungsbeispiel die Längserstreckung des Schutzbezuges 1 quer zur Längserstreckung der Bahn 32 orientiert. Als Folge hiervon ergibt sich für das in Fig. 5 dargestellte Ausführungsbeispiel eine Bahn mit einer Breite, die geringer ist als die Länge des Schutzbezuges 1. In diesem Fall ist das von dem abgeflachten Schutzbezug 1 gebildete Rechteck in der Figur 5 "liegend" oder in Förderrichtung 33 angeordnet, während dieses gemäß Fig. 6 "stehend" oder quer zur Förderrichtung 33 orientiert ist.

Für den Fall, dass vermieden werden soll, dass der von dem Fußbereich 13 gebildete "Lappen" während der Fertigung unkontrollierte Bewegungen ausführt, kann der Einschnitt 9 auch in einer Perforation bestehen, oder es verbleibt trotz des Einschnitts 9 zusätzlich zu dem Verbindungsbereich 10 noch mindestens ein Steg, der für das Abklappen des Fußbereiches 13 durchzureißen ist.

Mit der Vorderlage 2 ist die Lage des Schutzbezuges 1 bezeichnet, die auf der Vorderseite des Kraftfahrzeugsitzes 20 angeordnet ist, also auf der dem Monteur oder Fahrer zugewandten Seite. Die Rückseite beinhaltet die Bereiche, welche auf der Rückseite des Kraftfahrzeugsitzes 20 angeordnet sind.

In der vorliegenden Anmeldung kann die Angabe von "quer", beispielsweise im Zusammenhang mit einer Querschweißung,
- sowohl eine Orientierung quer zu einer Bahn oder der Förderrichtung bei der Herstellung
- als auch eine Orientierung quer zu einer Längsachse 8-8 des Schutzbezuges 1
bezeichnen.

Es ist darauf hinzuweisen, dass die Tiefe der gebildeten Taschen - und damit der Abstand des Verbindungsbereiches 10 von dem Grundschenkel des U-förmigen Einschnittes 9 - unter Umständen geringfügig oder wesentlich größer sein kann als in den dargestellten Figuren. Hierbei beträgt insbesondere die Tiefe der oberen Tasche bis zu 1/3 der Länge des Sitzbereiches. Hierdurch kann der Schutzbezug auch auf der Rückseite der Rückenlehne 21 so tief wie möglich heruntergezogen werden, damit eine möglichst große Fläche der Rückseite des Kraftfahrzeugsitzes 20 abgedeckt ist. Je tiefer die Tasche ist, desto besser ist der Schutz. Von Vorteil kann es weiterhin sein, wenn zumindest die obere Tasche die Rückenlehne möglichst eng umschließt, so dass diese einem Verrutschen des Schutzbezuges 1 längs und/oder quer zur Längserstreckung der Rückenlehne entgegenwirkt. Für den Fall, dass eine Unterseite des Sitzpolsters 22 nur teilweise zugänglich ist, da hier die Abstützung gegenüber dem Unterbau 24 erfolgt, kann die untere Tasche eine geringere Tiefe aufweisen, so dass unter Umständen lediglich ein vorderer Teil des Sitzpolsters 22 oder nur die vordere Kante des Sitzpolsters 22 geschützt ist. Hierbei sollte der Schutzbezug 1 nicht zu weit in den Kontakt mit dem Unterbau 24 kommen oder in diesen hinein ragen, da ansonsten die Gefahr bestehen kann, dass sich der Schutzbezug 1 beim Verschieben des Kraftfahrzeugsitzes 20 bei Testfahrten oder auch Montagearbeiten in den Schienen verklemmt oder hier einreißt. Ebenfalls zu vermeiden ist, dass der Schutzbezug 1 in Kontakt mit einem Schmiermittel für die Schienen kommt, welches beim Entfernen des Schutzbezuges 1 den Kraftfahrzeugsitz verunreinigen kann.

Ebenfalls möglich ist, dass der Schutzbezug 1, insbesondere für den Fall, dass die Vorderlage 2 und die Rücklage 3 mit unterschiedlichen Teilfolien gebildet sind, allseits verschweißt ist. Für die in Fig. 5 dargestellte Ausführungsform bedeutet dies, dass auch die seitlichen Begrenzungen 6, 7 durch Verschweißungen der Vorderlage 2 mit der Rücklage 3 gebildet sind, während für das in Fig. 6 dargestellte Ausführungsbeispiel die obere Begrenzung 4 und die untere Begrenzung 5 durch eine Verschweißung der Vorderlage 2 mit der Rücklage 3 gebildet sind. Eine derartige abgewandelte Fertigung kann zu dem Vorteil führen, dass der Einschnitt 9 problemlos in die Rücklage 3 vor der Verbindung derselben mit der Vorderlage 2 durch ein Messer oder ein Stanzwerkzeug eingebracht werden kann, ohne dass die Gefahr einer Beschädigung der Vorderlage 2 besteht oder zusätzliche Maßnahmen zum Trennen von Vorderlage und Rücklage zum Schutz der Vorderlage zu treffen sind. Wie bereits zuvor erwähnt, ist ein weiterer Vorteil einer derartigen Ausgestaltung, dass Folien mit unterschiedlichen Eigenschaften, unterschiedlichen Oberflächen oder Rutschfestigkeiten eingesetzt werden können.

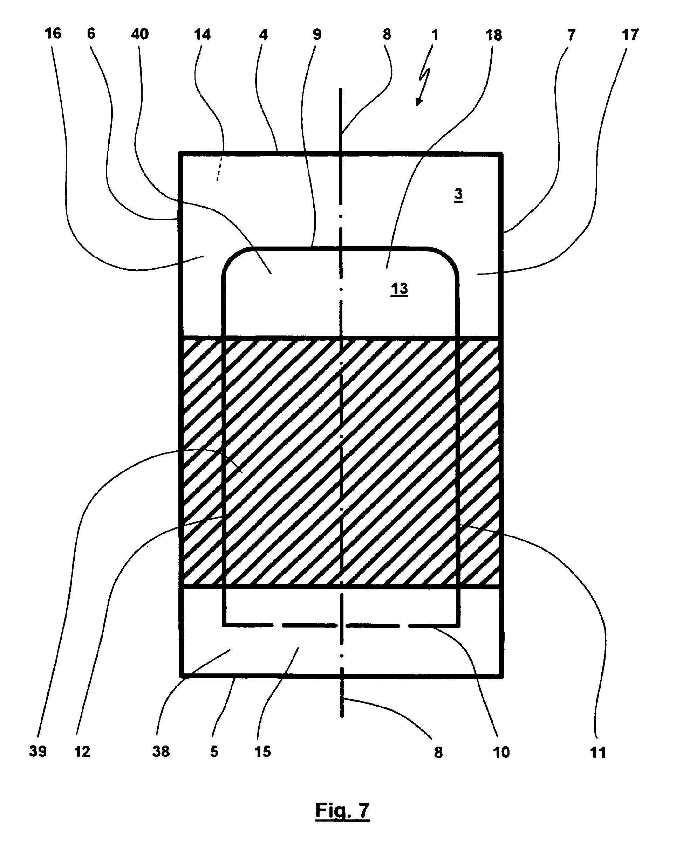

Fig. 7 zeigt eine weitere erfindungsgemäße Ausführungsform, bei welcher der Schutzbezug 1 grundsätzlich dieselbe Form und denselben Einschnitt 9 besitzt wie in Fig. 1. In Fig. 7 ist eine rückwärtige Ansicht des Schutzbezugs 1 dargestellt. Für dieses Ausführungsbeispiel des Schutzbezugs 1 ist die Vorderlage 2 mit einer koextrudierten Folie gebildet, die auf der außen liegenden, im Betrieb dem Benutzer zugewandten Seite glatt ist, während diese auf der dem Kraftfahrzeugsitz im Betrieb zugewandten Innenseite mit einer erhöhten Rutschfestigkeit ausgestattet ist. Hingegen ist die Rücklage mit drei in Längsrichtung hintereinander liegenden rechteckigen Teilbereichen 38, 39, 40 gebildet, wobei der mittlere Teilbereich 39 in Fig. 7 zur Verdeutlichung schraffiert dargestellt ist. Die Teilbereiche 38, 39, 40 sind in den aneinander angrenzenden Bereichen sowie im Übergangsbereich zu der Vorderlage 2 stoffschlüssig oder über Verschweißungen miteinander verbunden. Die Teilbereiche 38, 40 sind mit einer Monofolie gebildet, die im Herstellungsprozess geteilt wird. Diese Monofolie ist sowohl innen als auch außen mit einem verhältnismäßig glatten Material ausgebildet, wodurch eine Öffnung der Taschenbereiche 14, 15 sowie eine Ablösung des Fußbereiches 13 vereinfacht werden soll. Der Teilbereich 39 ist mit einer koextrudierten Folie gebildet, welche auf der Innenseite rutschfest oder haftend ausgebildet ist, während die Außenseite glatt ausgebildet ist. Wie in Fig. 7 zu erkennen ist, erstreckt sich der Einschnitt 9 mit den Seitenschenkeln 11, 12 vollständig durch den Teilbereich 39 sowie teilweise in die Teilbereiche 38, 40. Mit dem Ausklappen des Fußbereiches 13 und der Anordnung des Schutzbezuges 1 in dem Kraftfahrzeug trägt die zuvor erläuterte Gestaltung der unterschiedlichen Haftwerte oder Rauhigkeiten der Vorderlage 2 dafür Sorge, dass der Schutzbezug 1 einerseits gut an dem Kraftfahrzeugsitz 20 anhaftet und andererseits der Schutzbezug 1 gegenüber einem auf dem Kraftfahrzeugsitz 20 sitzenden Benutzer gleiten kann. In den Teilbereichen 38, 40 angeordnete Bereiche des Fußbereiches 13 können hier für die Montage des Schutzbezuges 1 in Folge der glatten Innenseite leicht gelöst werden. Mit dem Herausklappen des Fußbereichs 13 kann die rutschfeste Innenseite des Fußbereichs 13 auf eine Fußmatte oder den Fußboten 26 aufgelegt werden, so dass der Fußbereich 13 gut an dem Fußboden 26 anhaftet. Die glatte Innenseite des Fußbereichs 13 im Teilbereich 39 kann als Auflagefläche für die Füße des Benutzers dienen, so dass die Füße leicht über den Fußbereich 13 gleiten können, ohne dass dies zwingend zu einer ungewünschten Verlagerung des Fußbereichs 13 führt.

Unter einer einstückigen Ausbildung des Schutzbezugs 1 wird insbesondere eine Herstellung des Schutzbezugs aus einer einzigen durchgängigen Folie oder aus mehreren, stoffschlüssig miteinander verbundenen oder verschweißten Folienstücken verstanden.

Eine Beeinflussung des Anhaftens des Schutzbezugs 1 und unterschiedliches Anhaftverhalten verschiedener Seiten von Teilbereichen des Schutzbezugs, die Gestaltung als "glatt" oder "rauh" kann durch Einsatz einer Monofolie, einer koextrudierten Folie mit gezielt ausgewählten unterschiedlichen Materialien für die einzelnen Schichten der koextrudierten Folie erfolgen. Ebenfalls können Klebeschichten vorgesehen sein, über die gezielt ein Anhaften herbeigeführt werden kann. Weiterhin können gezielt die Gleitmittelanteile für unterschiedliche Schichten variiert werden. Möglich ist, dass ein Reibungskoeffizient für einen stark anhaftenden Teilbereich mit ungefähr 1,0 oder auch größer 1,0 ausgebildet ist, während in als glatt bezeichneten Oberflächen der Reibungskoeffizient bspw. lediglich ungefähr 0,1 oder lediglich 0,01 beträgt. Bei Monofolien kann der Reibungskoeffizient bspw. zwischen etwa 0,05 und 0,1 schwanken. Bei Verwendung von koextrudiertem Folienmaterial kann sich auf einer Seite ein Reibungskoeffizient von ungefähr 0,2 bis 0,8 ausbilden, während auf der anderen Seite ein Reibungskoeffizient von etwa 0,1 bis 0,2 gegeben ist. Eine Ermittlung des genannten Reibungskoeffizienten kann beispielsweise unter Anlehnung an die DIN 53375 erfolgen.

Ebenfalls möglich ist, dass für Teilbereiche des Schutzbezugs oder den gesamten Schutzbezug eine elastische, rückstellfähige Kunststofffolie Einsatz findet, wie diese beispielsweise in DE 109 23 889 C2 beschrieben ist.

Auch möglich ist die Einstellung eines Haftwertes über eine sogenannte "Corona-Behandlung", welche im Detail in DE 101 32 242 A1 beschrieben ist.

Zusammenfassend ist festzustellen, dass der Grundgedanke der vorliegenden Erfindung sowohl für den Einsatz eines Schlauches, eines Halbschlauches, jeweils mit oder ohne Seitenfalten, als auch von mindestens zwei Flachfolien, die beispielsweise über Verschweißungen miteinander verbunden sind, als Halbwerkzeug umgesetzt werden kann.

Der Schutzbezug 1 kann für einen Vordersitz Einsatz finden, so dass die Breite des Schutzbezuges 1 ungefähr der Breite des Vordersitzes entspricht. Ebenfalls möglich ist der Einsatz eines erfindungsgemäßen Schutzbezuges für eine Art Sitzbank, welche auch Rücksitze oder einen Rücksitz des Kraftfahrzeuges bilden kann. Hierbei kann sich der Schutzbezug auch über ungefähr die gesamte Wagenbreite erstrecken mit einer durchgehenden, "ausfaltbaren" Fußmatte. Dies ist insbesondere von Interesse für Vans, Kleinbusse oder ähnliche Fahrzeuge, bei denen der Fußraum im Bereich einer Bank oder eines Rücksitzes durchgehend ausgebildet ist, ohne dass hier beispielsweise ein Kardantunnel verläuft. Ebenfalls möglich ist eine verminderte Breite in dem Fall, in dem die Rückbank bspw. zu 1/3 und 2/3 geteilt ist.

Schließlich muss nicht - wie in den Figuren dargestellt - das gesamte Material der Rücklage für den Sitzbereich einerseits und den Fußbereich andererseits genutzt werden. Vielmehr ist des ebenfalls möglich, dass Teilbereiche für andere Aufgaben genutzt werden oder als nicht genutzte Teile herausgetrennt werden.

### BEZUGSZEICHENLISTE

- 1: Schutzbezug
- 2: Vorderlage
- 3: Rücklage
- 4: obere Begrenzung
- 5: untere Begrenzung
- 6: seitliche Begrenzung
- 7: seitliche Begrenzung
- 8: Längsachse
- 9: Einschnitt
- 10: Verbindungsbereich
- 11: Seitenschenkel
- 12: Seitenschenkel
- 13: Fußbereich
- 14: oberer Taschenbereich
- 15: unterer Taschenbereich
- 16: Verbindungsbereich
- 17: Verbindungsbereich
- 18: Ausnehmung
- 19: Sitzbereich
- 20: Kraftfahrzeugsitz
- 21: Rückenlehne
- 22: Sitzpolster
- 23: Hinweiselement
- 24: Unterbau
- 25: Fußraum
- 26: Fußboden
- 27: Kopfstütze
- 28: Verbindungsbereich
- 29: Abdeckbereich
- 30: Seitenfalte
- 31: Seitenfalte
- 32: Bahn
- 33: Förderrichtung
- 34: Perforation
- 35: Perforation
- 36: Querschweißung
- 37: Querschweißung
- 38: Teilbereich
- 39: Teilbereich
- 40: Teilbereich

## Patentansprüche

1. Schutzbezug (1) für ein Kraftfahrzeug mit einem Sitzbereich (19) zur zumindest teilweisen Abdeckung eines Kraftfahrzeugsitzes (20) des Kraftfahrzeuges, wobei ein Fußbereich (13) zur zumindest teilweisen Abdeckung eines Fußbodens (26) eines Fußraumes (25) des Kraftfahrzeuges vorgesehen ist und der Fußbereich (13) mit dem Sitzbereich (19) verbunden ist, **dadurch gekennzeichnet, dass** der Schutzbezug (1) mit einer Vorderlage (2) und einer Rücklage (3) gebildet ist, wobei der Fußbereich (13) mit einem Teilausschnitt der Rücklage (3) gebildet ist, und zur zumindest teilweisen Abdeckung des Fußbodens (26) eines sich vor dem Kraftfahrzeugsitz (20) erstreckenden Fußraumes (25) vorgesehen ist.

2. Schutzbezug (1) nach Anspruch 1, **dadurch gekennzeichnet, dass** der Sitzbereich (19) und der Fußbereich (13) einstückig ausgebildet sind.

3. Schutzbezug (1) nach Anspruch 2, **dadurch gekennzeichnet, dass** der Sitzbereich (19) und der Fußbereich (13) aus einer einzigen Folie hergestellt sind, wobei ein Einschnitt (9) der Folie den Fußbereich (13) und eine Ausnehmung (18) des Sitzbereiches (19) begrenzt.

4. Schutzbezug (1) nach Anspruch 3, **dadurch gekennzeichnet, dass** der Einschnitt (9) in erster Näherung U-förmig, V-förmig, T-förmig oder parabelförmig ausgebildet ist.

5. Schutzbezug (1) nach Anspruch 1, **dadurch gekennzeichnet, dass** die Vorderlage (2) und die Rücklage (3) mit unterschiedlichen Materialien, Zusammensetzungen, Additiven, Beschichtungen, mechanischen Eigenschaften, Reibwerten und/oder Rauhigkeiten gebildet sind.

6. Schutzbezug (1) nach Anspruch 1 oder 5, **dadurch gekennzeichnet, dass** ein Verbindungsbereich (10) zwischen Fußbereich (13) und Sitzbereich (19) beabstandet von einem Übergangsbereich (untere Begrenzung 5) von der Vorderlage (2) zu der Rücklage (3) angeordnet ist.

7. Schutzbezug (1) nach Anspruch 1, 5 oder 6, **dadurch gekennzeichnet, dass** der Schutzbezug (1) aus einem schlauchartigen Material gefertigt ist, wobei das schlauchartige Material
a) die Vorderlage (2) und Rücklage (3) bildet und
b) im oberen und unteren Endbereich über Querschweißungen (36, 37), die die Vorderlage (2) und die Rücklage (3) miteinander verbinden, zumindest teilweise geschlossen ist.

8. Schutzbezug (1) nach Anspruch 7, **dadurch gekennzeichnet, dass** die Querschweißungen (36, 37) benachbart zu Perforationen (35) angeordnet sind.

9. Schutzbezug (1) nach einem der vorhergehenden Ansprüche, **dadurch gekennzeichnet, dass** das mindestens eine Material des Schutzbezuges (1) zumindest in Teilbereichen auf unterschiedlichen Seiten unterschiedliche Rauhigkeiten und/oder Reibwerte besitzt.

10. Schutzbezug (1) nach einem der vorhergehenden Ansprüche, **dadurch gekennzeichnet, dass** optische Hinweiselemente (23) für einen ordnungsgemäßen Gebrauchs des Schutzbezuges (1) vorgesehen sind.

11. Schutzbezug (1) nach einem der vorhergehenden Ansprüche, **dadurch gekennzeichnet, dass** Fixierelemente vorgesehen sind zur Fixierung des Fußbereichs (13) gegenüber dem Fußraum (25) des Kraftfahrzeuges.

12. Schutzbezug (1) nach einem der vorhergehenden Ansprüche, **dadurch gekennzeichnet, dass** zumindest eine Seitenfalte (30, 31) im Bereich einer oberen Begrenzung (4) und/oder einer unteren Begrenzung (5) fixiert oder mit einer Schweißung (Querschweißung 36, 37)zumindest teilweise eingeschweißt ist.

13. Schutzbezug (1) nach einem der vorhergehenden Ansprüche, **dadurch gekennzeichnet, dass** der Schutzbezug (1) aus zwei Flachfolien hergestellt ist, die über Verschweißungen zu einem schlauchartigen Halbzeug miteinander verbunden sind.

14. Schutzbezug (1) nach einem der vorhergehenden Ansprüche, **dadurch gekennzeichnet, dass** die Vorderlage (2), Taschenbereiche (14, 15) und/oder Verbindungsbereiche (16,17) auf der im Betrieb dem Kraftfahrzeugsitz (20) zugewandten Seite zumindest teilweise mit einer größeren Rauhigkeit oder einem größeren Haftbeiwert ausgestattet sind als auf der anderen Seite.

15. Schutzbezug (1) nach einem der vorhergehenden Ansprüche, **dadurch gekennzeichnet, dass** der Fußbereich (13) auf der im Betrieb dem Fußboden (26) zugewandten Seite zumindest teilweise mit einer größeren Rauhigkeit oder einem größeren Haftbeiwert ausgestattet ist als auf der anderen Seite.

16. Schutzbezug (1) nach Anspruch 14 oder 15, **dadurch gekennzeichnet, dass** die unterschiedlichen Rauhigkeiten erzeugt werden durch Einsatz einer coextrudierten Folie.

17. Schutzbezug (1) nach einem der vorhergehenden Ansprüche, **dadurch gekennzeichnet, dass** die Vorderlage (2) und/oder Rücklage (3) mit Teilbereichen (38, 39, 40) aus unterschiedlichen Teilfolien gebildet ist/sind, die stoffschlüssig miteinander verbunden sind.

18. Bahn (32) mit mehreren Schutzbezügen (1a, 1b, 1 c) gemäß einem der Ansprüche 1 bis 17, die jeweils über Perforationen (34, 35) miteinander verbunden sind.

19. Bahn (32) nach Anspruch 18, **dadurch gekennzeichnet, dass** die Bahn (32) mit einem schlauchartigen Material gebildet ist, welches
a) Querschweißungen (36, 37) besitzt, wobei jeweils zwei Querschweißungen (36, 37) einen Schutzbezug (1) in Längsrichtung der Bahn (32) begrenzen, und
b) zumindest einen Einschnitt (9) in einer Lage (Rücklage 3) der Bahn (32) besitzt, welcher in erster Näherung die Form eines U, V oder T besitzt.

20. Bahn (32) nach Anspruch 19, **dadurch gekennzeichnet, dass** der U-, V- oder T-förmige Einschnitt in Richtung der Längsachse der Bahn (32) orientiert ist und die Querschweißungen (36, 37) in einem auf dem Kraftfahrzeugsitz (20) montiertem Zustand des Schutzbezuges (1) obere und untere Begrenzungen (4, 5) des Sitzbereichs (19) bilden.

21. Bahn (32) nach Anspruch 19, **dadurch gekennzeichnet, dass** der U-, V- oder T-förmige Einschnitt quer zur Längsachse der Bahn (32) orientiert ist und die Querschweißungen (36, 37) in einem auf dem Kraftfahrzeugsitz (20) montiertem Zustand des Schutzbezuges (1) seitliche Begrenzungen (6, 7) des Sitzbereiches (19) bilden.

22. Bahn (32) nach einem der Ansprüche 18 bis 21, **dadurch gekennzeichnet, dass** die Bahn (32) zu einer Rolle aufgewickelt ist.

## Claims

1. Protective cover (1) for a vehicle comprising a seat region (19) for at least partially covering a seat (20) of the vehicle, wherein a foot region (13) is provided for at least partially covering a floor (26) of a foot space (25) of the vehicle, the foot region (13) being linked or connected with the seat region (19), **characterized by** the protective cover (1) being built with a front layer (2) and a rear layer (3), wherein the foot region (13) is built by a partial cutout of the rear layer (3) and designated for at least partially covering the floor (26) of a foot space (25) extending in front of the seat (20) of the vehicle.

2. Protective cover (1) of claim 1, wherein the seat region (19) and the foot region (13) are built by one integral part.

3. Protective cover (1) of claim 2, wherein the seat region (19) and the foot region (13) are produced from one single foll, wherein a cutout (9) of the foll limits the foot region (13) and a recess (18) of the seat region (19).

4. Protective cover (1) of claim 3, wherein the cutout (9) In a first approximation comprises a U-, V-, T-shape or a parabolic shape.

5. Protective cover (1) of claim 1, wherein the front layer (2) and the rear layer (3) are built from different materials or different compositions or with different additives, coatings, mechanical properties, friction characteristics and/or roughnesses.

6. Protective cover (1) of claim 1 or 5, wherein a connecting region (10) between the foot region (13) and the seat region (19) is located distant from a transition region (lower limiting region 5) from the front layer (2) to the rear layer (3).

7. Protective cover (1) of claim 1, 5 or 6 wherein the protective cover (1) is produced from a tube-like material, wherein the tube-like material
a) builds the front layer (2) and the rear layer (3) and
b) is at least partially closed in the upper and lower and end region by transverse weldings (36, 37) said transverse weldings connecting the front layer (2) and the rear layer (3) with each other.

8. Protective cover (1) of claim 7, wherein the transverse weldings (36, 37) are located adjacent to perforations (35).

9. Protective cover (1) of one of claims 1 to 8, wherein the at least one material of the protective cover (1) comprises at least in partial regions located on different sides having different roughnesses and/or friction characteristics.

10. Protective cover (1) of one of claim 1 to 9, wherein optical indicating element (23) are provided for a proper use of the protective cover (1).

11. Protective cover (1) of one of claims 1 to 10, wherein fixing elements are provided for fixing the foot region (13) with respect to the foot space (25) of the vehicle.

12. Protective cover (1) of one of claims 1 to 11, wherein at least a side fold (30, 31) is fixed in the region of the upper limiting region (4) and/or a lower limiting region (5) or is at least partially welded by a welding (transverse welding 38, 37).

13. Protective cover (1) of one of claims 1 to 12, wherein the protective cover (1) Is produced from two plain foils being linked with each other by weldings to a tube-like semi-finished product.

14. Protective cover (1) of one of claims 1 to 13, wherein the front layer (2), pocket regions (14, 15) and/or connecting regions (16,17) on the side that In use faces towards the seat (20) of the vehicle is/are provided at least partially with a larger roughness or a larger static friction coefficient than on the other side.

15. Protective cover (1) of one of claims 1 to 14, wherein the foot region (13) on the side facing towards the floor (26) Is at least partially provided with a larger roughness or a larger static friction coefficient than on the other side.

16. Protective cover (1) of claim 14 or 15, wherein the different roughnesses are provided by use of a co-extruded foil.

17. Protective cover (1) of one of claims 1 to 16, wherein the front layer (2) and/or the rear layer (3) is/are built with partial regions (36, 39, 40) made of different foil parts being linked with each other by a bond.

18. Web (32) with a plurality of protective covers (1a, 1b, 1c) according to one of claims 1 to 17, said protective covers (1a, 1b, 1c) being linked with each other by perforations (34, 35).

19. Web (32) of claim 1 wherein the web (32) is built with a tube-like material
a) comprising transverse weldings (36, 37), wherein protective covers (18) are respectively limited in longitudinal direction of the web (32) by two transverse weldings (36, 37), and
b) comprising at least one cutout (9) in a layer (rear layer 3) of the web (32) having in a first approximation the shape of a U, V or T,

20. Web (32) of claim 19, wherein the U-, V- or T-shaped cutout has an orientation along the longitudinal axis of the web (32) and the transverse weldings (38, 37) built an upper and lower limiting region (4, 5) of the seat region (19) when assembling the protective cover (1) with the seat (20) of the vehicle,

21. Web (32) of claim 19, wherein the U-, V- or T-shaped cutout has an orientation transverse to the longitudinal axis of the web (32) and the transverse weldings (36, 37) build lateral limiting regions (6, 7) of the seat region (19) when assembling the protective cover (1) with the seat (20) of the vehicle.

22. Web (32) of one of claims 1B to 21, wherein the web (32) is wound up to a coil or bobbin.

## Revendications

1. Housse de protection (1) pour un véhicule automobile, comportant une zone pour siège (19) destinée à recouvrir au moins en partie un siège (20) du véhicule automobile, une zone pour les pieds (13) étant prévue pour recouvrir au moins en partie un plancher (26) d'un espace pour pieds (25) du véhicule automobile, et la zone pour les pieds (13) étant reliée à la zone pour siège (19), **caractérisée en ce que** la housse de protection (1) est formée par une couche avant (2) et une couche arrière (3), la zone pour les pieds (13) étant formée par une portion de la couche arrière (3) et étant prévue pour recouvrir au moins en partie le plancher (26) d'un espace pour pieds (25) qui se situe devant le siège (20) du véhicule automobile.

2. Housse de protection (1) selon la revendication 1, **caractérisée en ce que** la zone pour siège (19) et la zone pour les pieds (13) sont réalisées d'un seul tenant.

3. Housse de protection (1) selon la revendication 2, **caractérisée en ce que** la zone pour siège (19) et la zone pour les pieds (13) sont réalisées dans une seule feuille, une entaille (9) de la feuille délimitant la zone pour les pieds (13) et un évidement (18) de la zone pour siège (19).

4. Housse de protection (1) selon la revendication 3, **caractérisée en ce que** l'entaille (9) est réalisée selon une première approximation en forme de U, en forme de V, en forme de T ou en forme de parabole.

5. Housse de protection (1) selon la revendication 1, **caractérisée en ce que** la couche avant (2) et la couche arrière (3) sont réalisées avec des matériaux, des composés, des additifs, des revêtements, des propriétés mécaniques, des coefficients de frottement et/ou des rugosités différents.

6. Housse de protection (1) selon la revendication 1 ou 5, **caractérisée en ce qu'**une zone de jonction (10) entre la zone pour les pieds (13) et la zone pour siège (19) est disposée à distance d'une zone de transition (limite inférieure 5) entre la couche avant (2) et la couche arrière (3).

7. Housse de protection (1) selon la revendication 1, 5 ou 6, **caractérisée en ce que** la housse de protection (1) est réalisée dans un matériau tubulaire, sachant que le matériau tubulaire
a) forme la couche avant (2) et la couche arrière (3), et
b) et est fermé au moins en partie dans la zone d'extrémité supérieure et inférieure par des soudures transversales (36, 37) par lesquelles la couche avant (2) et la couche arrière (3) sont assemblées l'une à l'autre.

8. Housse de protection (1) selon la revendication 7, **caractérisée en ce que** les soudures transversales (36, 37) sont disposées à proximité de perforations (35).

9. Housse de protection (1) selon l'une quelconque des revendications précédentes, **caractérisée en ce que** ledit au moins un matériau de la housse de protection (1) possède des rugosités et/ou des coefficients de frottement différents au moins dans des zones partielles sur des côtés différents.

10. Housse de protection (1) selon l'une quelconque des revendications précédentes, **caractérisée en ce que** des éléments d'information (23) optiques sont prévus pour un usage correct de la housse de protection (1).

11. Housse de protection (1) selon l'une quelconque des revendications précédentes, **caractérisée en ce qu'**il est prévu des éléments de fixation pour la fixation de la zone pour les pieds (13) par rapport à l'espace pour pieds (25) du véhicule automobile.

12. Housse de protection (1) selon l'une quelconque des revendications précédentes, **caractérisée en ce qu'**au moins un pli latéral (30, 31) dans la zone d'une limite supérieure (4) et/ou d'une limite inférieure (5) est fixé ou est soudé au moins en partie par une soudure (soudure transversale 36, 37).

13. Housse de protection (1) selon l'une quelconque des revendications précédentes, **caractérisée en ce que** la housse de protection (1) est formée par deux feuilles plates, qui sont reliées l'une à l'autre par des soudures pour former un demi-produit tubulaire.

14. Housse de protection (1) selon l'une quelconque des revendications précédentes, **caractérisée en ce que** la couche avant (2), des zones de poches (14, 15) et/ou des zones de jonction (16, 17) possèdent, sur la face orientée vers le siège (20) en cours de service, une rugosité plus grande ou un coefficient d'adhérence plus grand que sur l'autre face.

15. Housse de protection (1) selon l'une quelconque des revendications précédentes, **caractérisée en ce que** la zone pour les pieds (13) possède, sur la face orientée vers le plancher (26) en cours de service, une rugosité plus grande ou un coefficient d'adhérence plus grand que sur l'autre face.

16. Housse de protection (1) selon la revendication 14 ou 15, **caractérisée en ce que** les différentes rugosités sont générées par l'utilisation d'une feuille coextrudée.

17. Housse de protection (1) selon l'une quelconque des revendications précédentes, **caractérisée en ce que** la couche avant (2) et/ou la couche arrière (3) sont formées par des zones partielles (38, 39, 40) réalisées dans des feuilles partielles différentes, qui sont assemblées entre elles par adhérence de matière.

18. Bande (32) comportant plusieurs housses de protection (1a, 1b, 1c)) selon l'une quelconque des revendications 1 à 17, lesquelles sont reliées les unes aux autres respectivement par des perforations (34, 35).

19. Bande (32) selon la revendication 18, **caractérisée en ce que** la bande (32) est formée par un matériau tubulaire, qui
a) comporte des soudures transversales (3ô, 37), sachant que respectivement deux soudures transversales (36, 37) délimitent une housse de protection (1) dans la direction longitudinale de la bande (32), et
b) comporte au moins une entaille (9) dans une couche (couche arrière (3)) de la bande (32), qui selon une première approximation a la forme d'un U, d'un V ou d'un T.

20. Bande (32) selon la revendication 19, **caractérisée en ce que** l'entaille en forme de V, de U ou de T est orientée dans la direction de l'axe longitudinal de la bande (32), et les soudures transversales (36, 37), dans la position montée de la housse de protection (1) sur le siège (20) du véhicule automobile, forment la limite supérieure (4) et la limite inférieure (5) de la zone pour siège (19).

21. Bande (32) selon la revendication 19, **caractérisée en ce que** l'entaille en forme de V, de U ou de T est orientée transversalement à l'axe longitudinal de la bande (32), et les soudures transversales (36, 37), dans la position montée de la housse de protection (1) sur le siège (20) du véhicule automobile, forment les limites latérales (6, 7) de la zone pour siège (19).

22. Bande (32) selon l'une quelconque des revendications 18 à 21, **caractérisée en ce que** la bande (32) est enroulée en forme de rouleau.
